# EUROPÄISCHE PATENTSCHRIFT

(11) **EP 1 422 652 B1**
(45) Veröffentlichungstag und Bekanntmachung des Hinweises auf die Patenterteilung: **18.07.2007**
(21) Anmeldenummer: 03025713.3
(22) Anmeldetag: 07.11.2003
(51) Int. Cl.: G06K 7/00

(54) **Verfahren zur kollisionsfreien Datenübertragung zwischen Schreib-/Lese-Geräten (SLG) und einem mobilen Datenspeicher (MDS) sowie Schreib-/Lese-Gerät (SLG) und Identifikationssystem für ein derartiges Verfahren**
Method for collision-free data exchange between reading/writing device and mobile data carrier, reading/writing device and identification system
Procédé pour la transmission sans collision d'informations entre un appareil de lecture/écriture et un support d'information mobile, appareil de lecture/écriture et système d'identification

(30) Priorität: 20.11.2002 DE 10254151
(43) Veröffentlichungstag der Anmeldung: 26.05.2004
(73) Patentinhaber: SIEMENS AKTIENGESELLSCHAFT, 80333 München (DE)
(72) Erfinder: Gila, Janos, Dr., 2340 Mödling (AT); Konrad, Wolfgang, 2340 Mödling (AT); Renner, Alexander, Dr., 1120 Wien (AT)

(56) Entgegenhaltungen:
- EP-A- 1 211 630
- EP-A- 1 233 531
- US-A- 5 532 702
- US-A- 5 687 175
- US-A1- 2001 043 569

## Beschreibung

Die Erfindung betrifft ein Verfahren zur kollisionsfreien Datenübertragung zwischen mindestens zwei Schreib-/Lese-Geräten (SLG) und mindestens einem mobilen Datenspeicher (MDS), insbesondere in einem Identifikationssystem mit mindestens einem an Objekten angebrachten mobilen Datenspeicher (MDS) zur Erfassung von objektbezogenen Zustands- und/oder Prozessdaten z.B. in einem Versand-, Transport- und/oder Fertigungssystem der einzelnen Objekte (siehe auch EP 1 233 531 oder WO 01/033725).

Bei einer Datenübertragung nach dem Stand der Technik zwischen mehreren Schreib-/Lese-Geräten (SLG) und mindestens einem mobilen Datenspeicher (MDS) kann bei gleichzeitiger Identifikation eines mobilen Datenspeichers (MDS) durch mehrere Schreib-/Lese-Geräte (SLG) eine Kollision auftreten, welche eine Kommunikation unterbindet. Zur Vermeidung einer derartigen Kollision werden die einzelnen Schreib-/Lese-Geräte (SLG) bislang miteinander verbunden und derartig synchronisiert, dass zu einem bestimmten Zeitpunkt nur ein einziges Schreib-/Lese-Gerät (SLG) aktiv ist. Die nicht-aktivierten Schreib-/Lese-Geräte (SLG) stehen in diesem Zeitraum nicht für Kommunikationszwecke zur Verfügung.

Der Erfindung liegt die Aufgabe zugrunde, ein Verfahren zur kollisionsfreien Datenübertragung zwischen mindestens zwei Schreib-/Lese-Geräten (SLG) und mindestens einem mobilen Datenspeicher (MDS) anzubieten. Ferner sollen ein Schreib-/Lese-Gerät (SLG) und ein Identifikationssystem für ein derartiges Verfahren angeboten werden.

Die Aufgabe wird für das Verfahren durch die Merkmale des Patentanspruchs 1 gelöst, welcher nach EP-A-1233531 abgegrenzt ist. Vorteilhafte Verfahrensvarianten werden in den Unteransprüchen 2- 8 beschrieben. Für das Schreib-/Lese-Gerät (SLG) wird die Aufgabe durch die Merkmale des Patentanspruchs 10 und für das Identifikationssystem durch die Merkmale des Patentanspruchs 11 gelöst.

Beim erfindungsgemäßen Verfahren zur kollisionsfreien Datenübertragung zwischen mindestens zwei Schreib-/Lese-Geräten (SLG) und mindestens einem mobilen Datenspeicher (MDS) ist ein Übertragungskanal mit mindestens einem Zeitschlitz mit mindestens zwei Registerbereichen vorgesehen, wobei den Registerbereichen nach einem Zufallsprinzip Identifikationsnummern der abfragenden Schreib-/Lese-Geräte (SLG) zugewiesen werden.

Die von den Schreib-/Lese-Geräten (SLG) ausgesendeten Identifikationsnummern werden nun vom mobilen Datenspeicher (MDS) in den jeweiligen Registerbereichen empfangen. Die einzelnen Registerbereiche sind innerhalb des Zeitschlitzes nacheinander angeordnet, so dass bei erfolgreichem Empfang einer Identifikationsnummer in einem ersten Registerbereich eine Erkennung der übertragenen Identifikationsnummer und damit des zugeordneten Schreib-/Lese-Geräts (SLG) durch den mobilen Datenspeicher (MDS) stattfindet.

Nach Erkennung einer Identifikationsnummer wird das zugeordnete Schreib-/Lese-Gerät (SLG) vom mobilen Datenspeicher (MDS) zum Aufbau einer Kommunikationsverbindung ausgewählt.

Nach einer vorteilhaften Verfahrensvariante wird bei der Datenübertragung ein Übertragungskanal mit zwei Zeitschlitzen mit jeweils drei Registerbereichen verwendet. Damit stehen insgesamt sechs Registerbereiche zur Verfügung, so dass insgesamt sechs Identifikationsnummern den einzelnen Registerbereichen zugeordnet werden können und eine statistisch kollisionsfreie Datenübertragung zwischen einem mobilen Datenspeicher (MDS) und insgesamt sechs Schreib-/Lese-Geräten (SLG) stattfinden kann.

Bei einer beabsichtigten Kommunikation mit einer höheren Anzahl von Schreib-/Lese-Geräten (SLG) muss eine entsprechende Anzahl von Registerbereichen vorgehalten werden.

Vorteilhafterweise werden die Identifikationsnummern von den Schreib-/Lese-Geräten (SLG) codiert übermittelt, um möglichst viele Registerbereiche in den genannten Zeitschlitzen realisieren zu können.

Als Zufallsprinzip zur Zuweisung der einzelnen Identifikationsnummern der abfragenden Schreib-/Lese-Geräte (SLG) zu den einzelnen hierfür vorgesehenen Registerbereichen des Übertragungskanals kann das an sich bekannte Aloha-Verfahren verwendet werden. Durch ein derartiges Zufallsprinzip kann in jedem neu gestarteten Kommunikationszyklus die Zuweisung der Identifikationsnummern zu den einzelnen Registerbereichen neu geregelt werden, um den einzelnen Schreib-/Lese-Geräten (SLG) auch eine annähernd gleichberechtigte Möglichkeit zur Kommunikation mit dem mobilen Datenspeicher (MDS) einzuräumen.

Der Übertragungskanal besitzt einen weiteren (nachfolgenden) Zeitschlitz, in dem der mobile Datenspeicher (MDS) bei Erkennung und Auswahl einer empfangenen Identifikationsnummer eines Schreib-/Lese-Geräts (SLG) die empfangene Identifikationsnummer des ausgewählten Schreib-/Lese-Geräts (SLG) an die abfragenden Schreib-/Lese-Geräte (SLG) zurücksendet, um diesen mitzuteilen, welches der abzufragenden Schreib-/Lese-Geräte (SLG) zur Kommunikation vom mobilen Datenspeicher (MDS) ausgewählt wurde.

Dabei empfangen die einzelnen Schreib-/Lese-Geräte (SLG) die vom mobilen Datenspeicher (MDS) zurückgesendete (codierte) Identifikationsnummer und vergleichen diese mit der eigenen Identifikationsnummer. Bei Übereinstimmung kann das jeweilige Schreib-/Lese-Gerät (SLG) feststellen, dass es vom mobilen Datenspeicher (MDS) zur Kommunikation ausgewählt wurde und kann mit der tatsächlichen Kommunikation nach der kollisionsfreien Erkennung durch den mobilen Datenspeicher (MDS) beginnen.

Gleichzeitig können diejenigen Schreib-/Lese-Geräte (SLG), deren Identifikationsnummer vom mobilen Datenspeicher (MDS) nicht ausgewählt wurde, feststellen, dass eine Kommunikation im Moment mit dem ausgewählten mobilen Datenspeicher (MDS) nicht möglich ist und ggf. zu einem späteren Zeitpunkt nochmals ein erneuter Identifikationsversuch gestartet werden kann.

Das erfindungsgemäße Verfahren kann grundsätzlich ein Übertragungsverfahren nach dem ISO-18000-4-MOD3-Verfahren verwenden, wobei die beschriebenen erfindungsgemäßen Abwandlungen vorgenommen werden. Damit kann dieses an sich bekannte und verbreitete Verfahren verwendet und zur kollisionsfreien Datenübertragung erfindungsgemäß weiterentwickelt werden.

Das erfindungsgemäße Schreib-/Lese-Gerät (SLG), der erfindungsgemäße mobile Datenspeicher (MDS) und das erfindungsgemäße Identifikationssystem dienen zur Anwendung des beschriebenen erfindungsgemäßen Verfahrens und können somit zur Durchführung einer kollisionsfreien Datenübertragung verwendet werden.

Die Erfindung ist anhand von Ausführungsbeispielen in den Zeichnungsfiguren näher erläutert. Es zeigen:
- FIG 1: eine schematische Darstellung einer Datenübertragung zwischen zwei Schreib-/Lese-Geräten (SLG) und einem mobilen Datenspeicher (MDS) sowie
- FIG 2: eine schematische Darstellung des Übertragungskanals zur Datenübertragung im Zeitablauf.

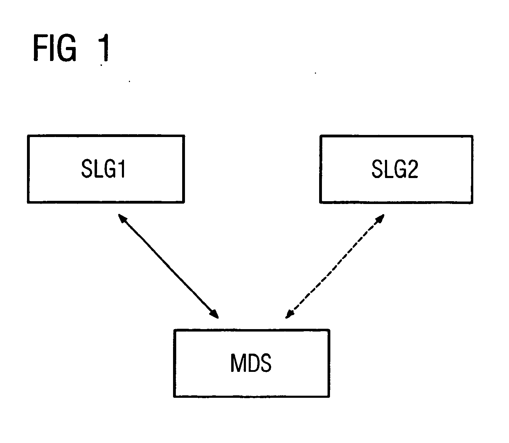

FIG 1 zeigt Schreib-/Lese-Geräte SLG1 und SLG2, welche eine Kommunikation mit einem mobilen Datenspeicher MDS anstreben. Hierzu senden SLG1 und SLG2 ihre Identifikationsnummern nach dem ISO-18000-4-MOD3-Verfahren zwangsläufig gleichzeitig im Zeitschlitz SID1 an den mobilen Datenspeicher MDS. Somit findet eine zwangsläufige Kollision statt.

Im Moment wünscht das MDS jedoch eine Kommunikation allein mit SLG1, während eine Kommunikation mit SLG2 im nicht erwünscht ist (gestrichelter Pfeil).

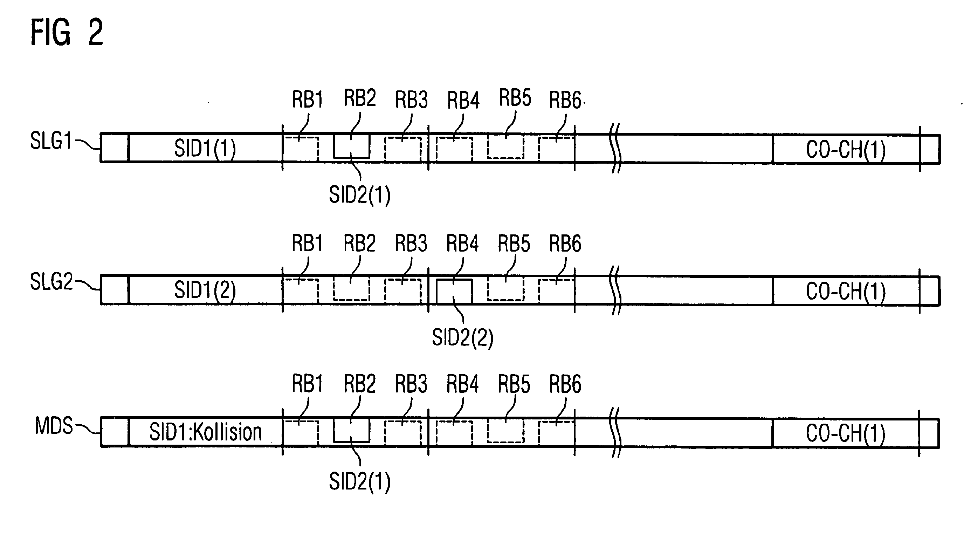

Zur Datenübertragung zwischen SLG1, SLG2 und MDS sind in FIG 2 die jeweiligen Übertragungskanäle des SLG1, SLG2 und des MDS abgebildet. Die Übertragungskanäle besitzen identische Zeitschlitze SID und Registerbereiche RB, wobei zunächst sowohl SLG1 als auch SGL2 ihre jeweilige Identifikationsnummern (1) und(2) im Zeitschlitz SID1 an das MDS absenden und das MDS im Zeitschlitz SID1 durch gleichzeitiges Eintreffen der Identifikationsnummern von SLG1 und SLG2 eine Kollision feststellt ("SID1: Kollision") und weder SLG1 noch SLG2 eindeutig identifizieren kann. Damit kann keine Kommunikation aufgebaut werden.

Erfindungsgemäß besitzt der verwendete Übertragungskanal zwei weitere Zeitschlitze SID2, die gemäß FIG 2 die drei Registerbereiche RB1-3 und RB 4 -6 aufweisen. Diese Registerbereiche RB sind durch ein Zufallsprinzip (z.B. das Aloha-Verfahren) zur Aufnahme der Identifikationsnummern (1) und (2) der hier beteiligten SLG1 und SLG2 vorbereitet. Beim dargestellten Verfahrensablauf ist Registerbereich RB2 zur Aufnahme der Identifikationsnummer (1) von SLG1 und ist Registerbereich RB4 zur Aufnahme der Identifikationsnummer (2) von SLG2 vorgesehen.

Erfindungsgemäß senden SLG1 und SLG2 ihre Identifikationsnummern nochmals an das MDS, und zwar in den Zeitschlitzen SID2.

Die Identifikationsnummer (1) von SLG1 wird im Registerbereich RB2 empfangen und die Identifikationsnummer (2) von SLG2 im Registerbereich RB 4. Da Registerbereich RB2 zeitlich früher als Registerbereich RB4 im Übertragungskanal angeordnet ist, wird vom MDS eine Erkennung von SLG1 festgestellt.

In einem späteren Zeitschlitz CO-CH wird daraufhin vom MDS die im Registerbereich RB2 empfangene Identifikationsnummer (1) an SLG1 und SLG2 insbesondere codiert zurückgesendet. Im SLG1 wird durch Vergleich mit der eigenen Identifikationsnummer festgestellt, dass SLG1 zur Kommunikation aufgewählt wurde. Im SLG2 wird durch Vergleich und Feststellung einer Nichtübereinstimmung mit der eigenen Identifikationsnummer festgestellt, dass SLG2 im Moment nicht zur Kommunikation ausgewählt wurde.

Im folgenden findet nun eine (weiter nicht abgebildete) Datenübertragung zwischen SLG1 und MDS statt. SLG1 konnte kollisionsfrei vom MDS durch Anwendung des erfindungsgemäßen Verfahrens zur weiteren Kommunikation ausgewählt werden.

Bei Anlehnung und Modifikation des ISO-18000-4-MOD3-Verfahrens entspricht Zeitschlitz SID1 einem Zeitschlitz S1 des ISO-18000-4-MOD3-Verfahrens, entsprechen die Zeitschlitze SID2 Zeitschlitzen R1 des ISO-18000-4-MOD3-Verfahrens und entspricht Zeitschlitz CO-CH einem Zeitschlitz R2 des ISO-18000-4-MOD3-Verfahrens.

## Patentansprüche

1. Verfahren zur kollisionsfreien Datenübertragung zwischen mindestens zwei Schreib-/Lese-Geräten (SLG) und mindestens einem mobilen Datenspeicher (MDS), wobei die Datenübertragung über einen Übertragungskanal mit mindestens einem ersten und zweiten Zeitschlitz (SID2) erfolgt und der zweite Zeitschlitz (SID2) zwei zeitlich nacheinander angeordnete Registerbereiche (RB1, RB2) aufweist,
**dadurch gekennzeichnet, dass** die mindestens zwei Schreib-/Lese-Geräte (SLG) ihre jeweilige Identifikationsnummer (1, 2) in dem ersten Zeitschlitz absenden und dass die Geräte (SLG) nochmals ihre Identifikationsnummer in einem, nach einem Zufallsprinzip zugewiesenen, Registerbereich absenden.

2. Verfahren nach Anspruch 1, wobei der Übertragungskanal zwei Zeitschlitze (SID2) mit je drei Registerbereichen (RB1-RB3, RB4-RB6) aufweist.

3. Verfahren nach Anspruch 1 oder 2, wobei die Identifikationsnummern (1, 2) der abfragenden Schreib-/Lese-Geräte (SLG) codiert übertragen werden.

4. Verfahren nach einem der vorhergehenden Ansprüche, wobei als Zufallsprinzip das Aloha-Verfahren verwendet wird.

5. Verfahren nach einem der vorhergehenden Ansprüche, wobei der Übertragungskanal mindestens einen weiteren Zeitschlitz (CO-CH) aufweist, in dem eine vom mobilen Datenspeicher (MDS) empfangene und erkannte Identifikationsnummer (1, 2) eines Schreib-/Lese-Geräts (SLG) an die abfragenden Schreib-/Lese-Geräte (SLG) zurückgesendet wird.

6. Verfahren nach Anspruch 5, wobei ein Kommunikationsaufbau zwischen einem Schreib-/Lese-Gerät (SLG) und dem mobilen Datenspeicher (MDS) erfolgt, wenn die vom mobilen Datenspeicher (MDS) zurückgesendete Identifikationsnummer mit der eigenen Identifikationsnummer (1, 2) übereinstimmt.

7. Verfahren nach Anspruch 5 oder 6, wobei ein Schreib-/Lese-Gerät (SLG) keine Kommunikation mit dem mobilen Datenspeicher (MDS) aufbaut, wenn die empfangene Identifikationsnummer nicht mit der eigenen Identifikationsnummer (1, 2) übereinstimmt.

8. Verfahren nach einem der vorhergehenden Ansprüche, wobei das Verfahren zur Datenübertragung zwischen den Schreib-/Lese-Geräten (SLG) und dem mobilen Datenspeicher (MDS) in Anlehnung an den ISO-18000-4-MOD3-Standard erfolgt.

9. Verwendung des Verfahrens nach einem der vorigen Ansprüche zur Datenübertragung in einem Identifikationssystem mit mindestens einem an Objekten angebrachten mobilen Datenspeicher (MDS) zur Erfassung von objektbezogenen Zustands- und/ oder Prozessdaten, z.B. in einem Versand-, Transport- und/oder Fertigungssystem der einzelnen Objekte.

10. Schreib-/Lese-Gerät (SLG) mit Mitteln die eingerichtet sind das Verfahrens zur kollisionsfreien Datenübertragung nach einem der Ansprüche 1 bis 8 durchzuführen , insbesondere in einem Identifikationssystem zur Datenübertragung mit mindestens einem an Objekten angebrachten mobilen Datenspeicher (MDS).

11. Identifikationssystem mit zumindest einem Schreib-/Lese-Gerät (SLG) nach Anspruch 10 und zumindest einem mobilen Datenspeicher (MDS).

## Claims

1. Method for collision-free data transmission between at least two read/write devices (SLG) and at least one mobile data memory (MDS), with the data being transmitted over a transmission channel with at least one first and one second time slot (SID2) and the second time slot (SID2) featuring two register areas (RB1, RB2) arranged consecutively in time.
**characterised in that**
the at least two read/write devices (SLG) send out their respective identification number (1, 2) in the first time slot and that the devices (SLG) again send their identification number in a register area allocated according to a random principle.

2. Method according to claim 1, with the transmission channel featuring two time slots (SID2) each with three register areas (RB1-RB3, RB4-RB6).

3. Method in accordance claim 1 or 2, with the identification numbers (1, 2) of the requesting read/write devices (SLG) being transmitted encoded.

4. Method according to one of the previous claims, with the Aloha method being used as the random principle.

5. Method according to one of the previous claims, with the transmission channel featuring at least one "further" time slot (CO-CH), in which an identification number (1, 2) of a read/write device (SLG) received and recognized by the mobile data memory (MDS) is sent back to the requesting read/write device (SLG).

6. Method according to claim 5, with a communication setup being undertaken between a read/write device (SLG) and the mobile data memory (MDS), if the identification number sent back by the mobile data memory (MDS) matches the own identification number (1, 2).

7. Method according to claim 5 or 6, with a read/write device (SLG) not setting up any communication with the mobile data memory (MDS) if the received identification number does not match the own identification number (1, 2).

8. Method according to one of the previous claims, with the method for data transmission between read/write devices (SLG) and the mobile data memory (MDS) complying with the ISO-18000-4-MOD3 Standard.

9. Use of the method according to one of the previous claims for data transmission in an identification system with at least one a mobile data memory (MDS) fixed to objects for recording object-related state and/ or process data, e.g. in a dispatch, transport and/or manufacturing system of the individual objects.

10. Read/write device (SLG) with means which are set up to execute the method for collision-free data transmission according to one of the claims 1 to 8 (especially in an identification system for data transmission with at least one mobile data memory (MDS) fixed to objects.

11. Identification system with at least one read/write device (SLG) according to claim 10 and at least one mobile data memory (MDS).

## Revendications

1. Procédé de transmission de données sans collision entre au moins deux appareils d'écriture / lecture (SLG) et au moins une mémoire de données mobile (MDS), la transmission de données s'effectuant par l'intermédiaire d'un canal de transmission avec au moins un premier et un deuxième créneau temporel (SID2) et le deuxième créneau temporel (SID2) comportant deux zones de registre (RB1, RB2) disposées temporellement l'une après l'autre,
**caractérisé par le fait que** les au moins deux appareils d'écriture / lecture (SLG) émettent leur numéro d'identification respectif (1, 2) dans le premier créneau temporel et que les appareils (SLG) émettent encore une fois leur numéro d'identification dans une zone de registre attribuée selon un principe aléatoire.

2. Procédé selon la revendication 1, dans lequel le canal de transmission comporte deux créneaux temporels (SID2) avec chacun trois zones de registre (RB1 à RB3, RB4 à RB6).

3. Procédé selon la revendication 1 ou 2, dans lequel les numéros d'identification (1, 2) des appareils d'écriture / lecture demandeurs (SLG) sont transmis sous forme codée.

4. Procédé selon l'une des revendications précédentes, dans lequel on utilise comme principe aléatoire le procédé Aloha.

5. Procédé selon l'une des revendications précédentes, dans lequel le canal de transmission comporte au moins un autre créneau temporel (CO-CH) dans lequel un numéro d'identification (1, 2), reçu et reconnu par la mémoire de données mobile (MDS), d'un appareil d'écriture / lecture demandeurs (SLG) est renvoyé aux appareils d'écriture / lecture demandeurs (SLG).

6. Procédé selon la revendication 5, dans lequel un établissement de communication entre un appareil d'écriture / lecture (SLG) et la mémoire de données mobile (MDS) s'effectue lorsque le numéro d'identification renvoyé par la mémoire de données mobile (MDS) coïncide avec le numéro d'identification particulier (1, 2) dudit appareil d'écriture / lecture.

7. Procédé selon la revendication 5 ou 6, dans lequel un appareil d'écriture / lecture (SLG) n'établit pas de communication avec la mémoire de données mobile (MDS) lorsque le numéro d'identification reçu ne coïncide pas avec son propre numéro d'identification (1, 2).

8. Procédé selon l'une des revendications précédentes, dans lequel le procédé pour la transmission de données entre les appareils d'écriture / lecture (SLG) et la mémoire de données mobile (MDS) s'effectue suivant le standard ISO-18000-4-MOD3.

9. Utilisation du procédé selon l'une des revendications précédentes pour la transmission de données dans un système d'identification avec au moins une mémoire de données mobile (MDS) placée sur des objets en vue de l'acquisition de données d'état et/ou de processus se rapportant aux objets, par exemple dans un système d'expédition, de transport et/ou de fabrication des différents objets.

10. Appareil d'écriture / lecture (SLG) avec des moyens qui sont conçus pour mettre en oeuvre le procédé de transmission de données sans collision selon l'une des revendications 1 à 8, notamment dans un système d'identification pour la transmission de données avec au moins une mémoire de données mobile (MDS) placée sur des objets.

11. Système d'identification avec au moins un appareil d'écriture / lecture (SLG) selon la revendication 10 et avec au moins une mémoire de données mobile (MDS).
